# EUROPÄISCHE PATENTSCHRIFT

(11) **EP 0 920 583 B1**
(45) Veröffentlichungstag und Bekanntmachung des Hinweises auf die Patenterteilung: **21.05.2003**
(21) Anmeldenummer: 98912266.8
(22) Anmeldetag: 18.02.1998
(51) Int. Cl.: F02M 59/46, F02M 47/02, F16K 31/00, H01L 41/04

(54) **VENTIL ZUM STEUERN VON FLÜSSIGKEITEN**
VALVE FOR CONTROLLING LIQUIDS
SOUPAPE POUR REGULER LE DEBIT DE LIQUIDES

(30) Priorität: 21.06.1997 DE 19726481
(43) Veröffentlichungstag der Anmeldung: 09.06.1999
(73) Patentinhaber: ROBERT BOSCH GMBH, 70442 Stuttgart (DE)
(72) Erfinder: POTSCHIN, Roger, D-74336 Brackenheim (DE); BOECKING, Friedrich, D-70499 Stuttgart (DE)
(86) Internationale Anmeldenummer: DE9800476
(87) Internationale Veröffentlichungsnummer: WO98059169

(56) Entgegenhaltungen:
- EP-A- 0 477 400
- GB-A- 2 193 386

## Beschreibung

### Stand der Technik

Die Erfindung betrifft ein Ventil zum Steuern von Flüssigkeiten gemäß der Gattung des Patentanspruchs 1. Durch die EP 0 477 400 ist ein solches Ventil bekannt. Dort ist der Betätigungskolben des Ventilgliedes in einem im Durchmesser kleineren Teil einer Stufenbohrung dicht verschiebbar angeordnet, wogegen ein im Durchmesser größerer Kolben, der mit dem Piezoaktor bewegt wird, in einem im Durchmesser größeren Teil der Stufenbohrung angeordnet ist. Zwischen den beiden Kolben ist ein hydraulischer Raum eingespannt, derart daß, wenn der größere Kolben durch den Aktor um eine bestimmte Wegstrecke bewegt wird, der Betätigungskolben des Ventilgliedes um einen um das Übersetzungsverhältnis der Stufenbohrungsdurchmesser vergrößerten Weg bewegt wird. Das Ventilglied, der Betätigungskolben, der im Durchmesser größere Kolben und der Piezoaktor liegen auf einer gemeinsamen Achse hintereinander.

Bei solchen Ventilen besteht das Problem, Längenänderungen des Piezoaktors, des Ventils oder des Ventilgehäuses durch den hydraulischen Kopplungsraum, der im folgenden kurz Druckraum genannt wird, auszugleichen. Da der Piezoaktor zum Öffnen des Ventils im Druckraum einen Druck erzeugt, führt dieser Druck auch zu einem Verlust an Druckraum-Flüssigkeit. Um ein Leerpumpen des Druckraumes zu verhindern, ist eine Wiederbefüllung notwendig. Einrichtungen, die dieses Problem lösen, sind zwar bereits bekannt (EP 0 477 400 A1), dabei ist aber weder ein Ventil zur Überwachung der Nachfüllung vorgesehen, noch ist ausgesagt, ob das Vorratsmittel nachlieferbar ist.

### Vorteile der Erfindung

Das erfindungsgemäße Ventil mit den kennzeichnenden Merkmalen des Patentanspruches 1 hat demgegenüber den Vorteil, daß der Druckraum keinen Flüssigkeitsverlust erleidet. Eine nachteilige Längenänderung der Gesamteinrichtung ist damit vermieden, auch wenn der Piezoaktor, das Ventil oder das Gehäuse seine Länge zum Beispiel bei Erwärmung ändert. Desweiteren hat die Einrichtung einen einfachen Aufbau, und es ist eine sichere und zuverlässige Abdichtung geschaffen.

### Zeichnung

Mehrere Ausführungsbeispiele der Erfindung sind in der Zeichnung dargestellt und in der nachfolgenden Beschreibung näher erläutert. Es zeigen:
Figur 1 ein Kraftstoffeinspritzventil im Schnitt,
Figur 2 ein erstes Ausführungsbeispiel eines Druckübersetzers mit Flüssigkeitsnachspeiseventil,
Figur 3 eine zweite Bauart eines Druckübersetzers mit Nachspeiseventil und
Figur 4 eine dritte Bauart eines Druckübersetzers, ebenfalls mit Nachspeiseventil.

### Beschreibung der Ausführungsbeispiele

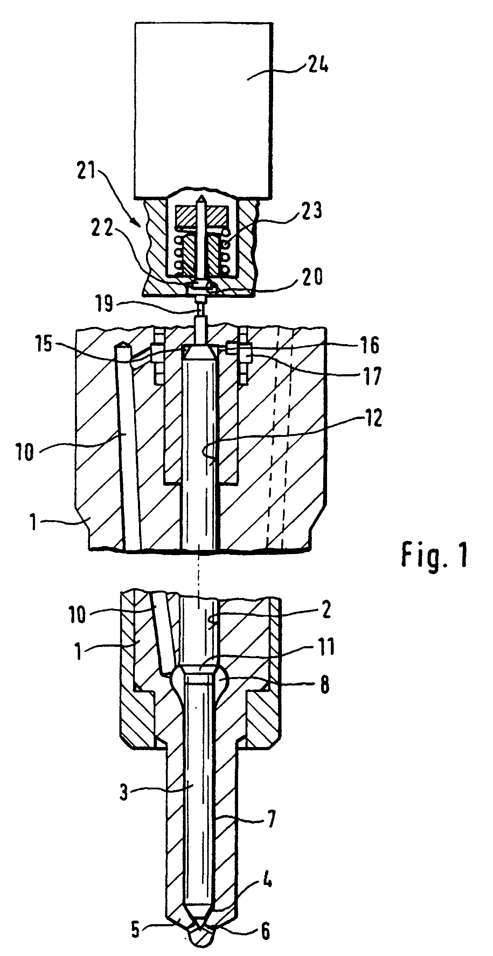

Das erfindungsgemäße Ventil findet Anwendung bei einem Kraftstoffeinspritzventil, das in wesentlichen Teilen im Schnitt in der Figur 1 wiedergegeben ist. Dieses Einspritzventil weist ein Ventilgehäuse 1 auf, in dem in einer Längsbohrung 2 eine Ventilnadel 3 geführt ist. An ihrem einen Ende ist die Ventilnadel mit einer kegelförmigen Dichtfläche 4 versehen, die an der in den Brennraum ragenden Spitze 5 des Ventilgehäuses mit einem Sitz zusammenwirkt, von dem aus Einspritzöffnungen abführen, die in das Innere des Einspritzventils, hier den die Ventilnadel 3 umgebenden unter Einspritzdruck stehendem Kraftstoff gefüllten Ringraum 7 mit dem Brennraum verbinden, um so eine Einspritzung zu vollziehen, wenn die Ventilnadel von ihrem Sitz abgehoben hat. Der Ringraum ist mit einem weiteren Druckraum 8 verbunden, der ständig in Verbindung mit einer Druckleitung 10 steht, über die dem Kraftstoffeinspritzventil von einem nicht weiter gezeigten Kraftstoffhochdruckspeicher Kraftstoff unter Einspritzdruck zugeführt wird. Dieser hohe Kraftstoffdruck wirkt auch in den Druckraum 8, und dort auf eine Druckschulter 11, über die in bekannter Weisse die Ventilnadel bei geeigneten Bedingungen von ihrem Ventilsitz abgehoben werden kann.

Am anderen Ende der Ventilnadel ist diese in eine Zylinderbohrung 12 geführt und schließt dort mit ihrer Stirnseite 14 einen Steuerdruckraum 15 ein, der über eine Drosselverbindung 16 ständig mit einem Ringraum 17 verbunden ist, der, wie auch der Druckraum 8, ständig mit dem Kraftstoffhochdruckspeicher in Verbindung steht. Axial führt vom Steuerdruckraum 15 eine Drosselbohrung 19 ab zu einem Ventilsitz 20 eines Steuerventils 21 in der erfindungsgemäßen Ausgestaltung. Mit dem Ventilsitz wirkt ein Ventilglied 22 des Steuerventils zusammen, das in abgehobenem Zustand eine Verbindung zwischen dem Steuerdruckraum 15 und einem Federraum 18 herstellt, der wiederum ständig mit einem Entlastungsraum verbunden ist. In dem Federraum ist eine das Ventilglied 22 in Schließrichtung belastende Druckfeder 23 angeordnet, die das Ventilglied also auf den Ventilsitz 20 hin beaufschlagt, so daß in Normalstellung des Steuerventils diese Verbindung des Steuerdruckraums 15 verschlossen ist. Da die stirnseitige Fläche der Ventilnadel im Bereich des Steuerdruckraumes größer ist als die Fläche der Druckschulter 11 hält derselbe Krafatstoffdruck im Steuerdruckraum, der auch in dem Druckraum 8 vorherrscht, nun die Ventilnadel 3 in geschlossener Stellung. Ist das Ventilglied 22 jedoch abgehoben, so wird der Druck im über die Drosselverbindung 16 abgekoppelten Steuerdruckraum 15 entlastet. Bei der nun fehlenden Schließkraft öffnet die Ventilnadel 3 schnell und kann andererseits in Schließstellung gebracht werden, sobald das Ventilglied 22 wieder in Schließstellung kommt. Von diesem Zeitpunkt an baut sich dann schnell über die Drossel 16 der ursprüngliche hohe Kraftstoffdruck im Steuerdruckraum 15 wieder auf.

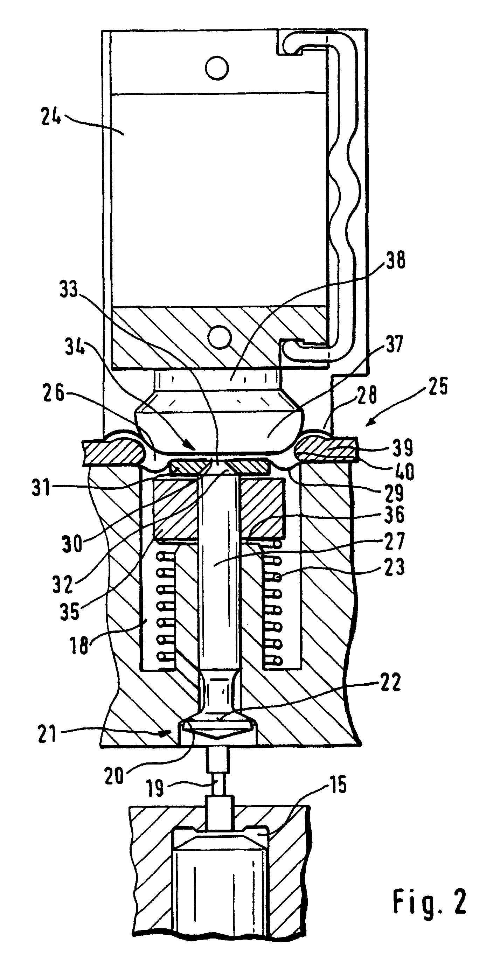

Wie die Figur 2 besser erkennen läßt, hat das erfindungsgemäße Ventil als Betätiger einen Piezoaktor 24, der über einen Membranaktor 25 mit einem hydraulischen Kopplungsraum 26 an einem Schaft 27 des Ventilgliedes 22 angreift.

Der Membranaktor 25 kann erfindungsgemäß verschiedenartig ausgebildet sein. In der Figur 2 hat er als Trennwände zwei mit je einer Ringsicke versehene Membranen 28, 29, von denen die dem Schaft 27 des Ventilgliedes 22 zugekehrte Membran 29 mittig mit einem Durchgangsloch 30 versehen ist. Im Bereich des Durchgangsloches 30 ist die Membran 29 dicht und fest mit einer Ringscheibe 31 verbunden, deren Lochrand als Ventilsitz 33 für ein Schließglied 33 eines Befüllungsventils 33 bestimmt ist. Das Schließglied 33 ist am oberen Ende des Schaftes 27 vorgesehen. Auf dem Schaft 27 ist ein Ringkörper 35 aufgeschrumpft, welcher der Druckfeder als Anlage dient und der den Ventilhub des Ventilgliedes bestimmt durch Anschlag an einer gehäusefesten Anschlagschulter 36.

An der dem Piezoaktor 24 zugekehrten Membran 28 des Membranaktors 25 liegt ein balliges Ende 37 eines am Piezoaktor 24 befestigten Aktorkolbens 38 satt an. Eine außen zwischen den beiden Membranen 28 und 29 liegende Einspannwand 39 ist mit einem Durchgangsloch 40 versehen, dessen Innenwand gerundet ist, um ein Abrollen der Membranen 28 und 29 zu gewährleisten.

### Wirkungsweise

Bei der Arbeit des Ventils unter Verwendung des Piezoaktors 24 ist es notwendig, Längenänderungen des Piezoaktors 24, des Ventils selbst oder des Ventilgehäuses 1 auszugleichen. Diesem Zweck dient der hydraulische Kopplungsraum 26, mit dem gleichzeitig auch die Hubbewegung des Piezoaktors 24 übersetzt wird. Der Kopplungsraum 26 dient also gleichzeitig als Druckstück und als Längenkorrektor.

Jedesmal, wenn der Piezoaktor eingeschaltet wird, entsteht im Kopplungsraum 26 ein Druckanstieg. Dieser Druck bewirkt eine nach unten gerichtete Kraft am Schaft 27 des Ventilgliedes 22, so daß dieses öffnet. Der Druck am Steg führt aber auch zu einem Flüssigkeitsverlust von Koppelraumflüssigkeit über Dichtspalten. Um ein Leerpumpen des Kopplungsraums 26 zu verhindern muß der Kopplungsraum nachgefüllt werden. Diese Nachfüllung findet statt, wenn der Piezoaktor 24 abgeschaltet wird. Dann wird das Ventilglied 22 von seinem Sitz abgefangen und - auf der anderen Seite des Schaftes 27 - hebt sich der Ventilsitz 32 von dem Schließglied 33 ab. Die Vorspannkraft der Membran bestimmt den Öffnungs-Druck, ab dem die Membran 29 von dem Schließglied 33 abhebt. Diese Vorspannkraft muß sehr klein sein, z.B. 3N bei einem Öffnungsdifferenzdruck von 1 bar, d.h. auch die Federsteifigkeit der Membran 39 muß gering sein. Dies ist auch wichtig, um der Hubbewegung wenig Gegenkraft entgegenzubringen.

Über das geöffnete Befüllungsventil 34 strömt Flüssigkeit aus dem flüssigkeitsgefüllten Federraum 18 in den hydraulischen Kopplungsraum 26 und gleicht den eingetretenen Verlust wieder aus, indem ein Druckausgleich herbeigeführt wird. Da die untere Membran 39 die im Kopplungsraum 26 bestehende Druckkraft unmittelbar auf das Ventilglied 22 übertragen muß, ist sie in ihrer Mitte durch die Ringscheibe 31 verstärkt.

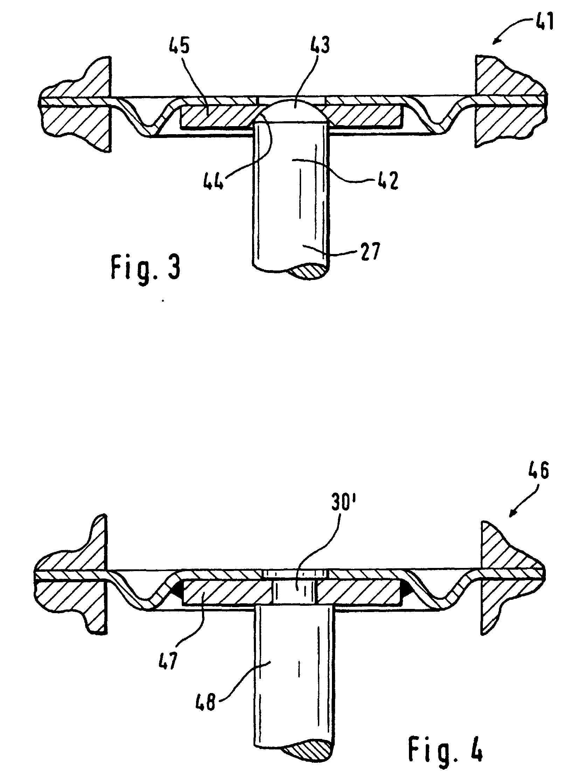

Das Schließglied 33 ist beim Ausführungsbeispiel nach der Figur 2 kegelig ausgeführt. Wie die Figur 3 erkennen läßt, kann ein Schließglied 42 eines Befüllungsventils 41 auch ballig mit einem Kopf 43 in Form eines Kugelabschnitts ausgebildet sein. Eine einen Ventilsitz 44 bildende Ringscheibe 45 kann ein kegeliges oder ein konkaves Loch aufweisen.

Die Figur 4 zeigt ein weiteres Ausführungsbeispiel eines Befüllungsventils 46. Hier ist eine Ringscheibe 47 mit der Membran 29 verschweißt und bildet einen Flachsitz für die Stirnseite des Schaftes. In Ringscheibe und Membran ist wiederum das Durchgangsloch 30' gebildet, das durch die Stirnseite des Schaftes 48 verschlossen werden kann, der somit in der Funktion eines Ventilgliedes mit der Ringscheibe ein Flachsitzventil bildet, das eine vergleichbare Funktion wie die Ventilausgestaltungen der Figuren 2 und 3 hat.

## Patentansprüche

1. Ventil zum Steuern von Flüssigkeiten mit einem über einen Membranaktor (25) betätigbaren Ventilglied (22), das von einer Druckfeder (23) in Schließrichtung auf seinen Ventilsitz (20) beaufschlagt ist, wobei der Membranaktor (25) eine bewegliche Wand eines Kopplungsraumes (26) bildet, der auf seiner anderen Seite von einem Aktorkolben (38) eines Piezoaktors (24) begrenzt wird, durch dessen Bewegung eine Druckerhöhung in dem Kopplungsraum (26) erzeugbar ist, durch die das Ventilglied (22) gegen die Kraft der Druckfeder (23) in Öffnungsrichtung verstellbar ist, **dadurch gekennzeichnet, daß** der Kopplungsraum (26) auf der Seite des Ventilgliedes (22) durch eine Membran (29) begrenzt ist, in der ein Durchgangsloch (30) vorgesehen ist, das mittels einem mit dem Ventilglied (22) verbundenen Schließglied (33, 42) verschließbar und zu öffnen ist und somit mit einem Befüllungsventil (34, 41, 46) versehen ist, über das Leckverluste im Kopplungsraum (26) ausgleichbar sind.

2. Ventil nach Anspruch 1, **dadurch gekennzeichnet, daß** die Membran (29) mit einer Ringsicke versehen ist.

3. Ventil nach Anspruch 1 oder 2, **dadurch gekennzeichnet, daß** das Schließglied (33, 42) als Teil des Schaftes (27, 48) des Ventilgliedes (22) ausgebildet ist und daß zur Abstützung der Membran (29) eine unmittelbar an ihr anliegende Ringscheibe (31, 45, 47) vorgesehen ist.

4. Ventil nach einem der Ansprüche 1 bis 3, **dadurch gekennzeichnet, daß** ein Öffnungshub des Ventilgliedes (22) durch einen auf seinen Schaft (27, 48) aufgeschrumpften, mit einer gehäusefesten Anschlagschulter zusammenarbeitenden Ringkörper (35) begrenzt ist.

5. Ventil nach einem der Ansprüche 1 bis 4, **dadurch gekennzeichnet, daß** der Membranaktor (25) gegenüber dem Aktorkolben (38) des Piezoaktors (24) ebenfalls durch eine Membran (28) begrenzt ist.

## Claims

1. Valve for controlling liquids, with a valve element (22) which can be actuated by means of a membrane actuator (25) and is acted on by a compression spring (23) in the closing direction towards its valve seat (20), the membrane actuator (25) forming a movable wall of a coupling space (26), which is bounded on its other side by an actuator piston (38) of a piezoelectric actuator (24), by the movement of which a pressure increase can be produced in the coupling space (26), by which increase the valve element (22) can be adjusted in the opening direction against the force of the compression spring (23), **characterized in that** the coupling space (26) is bounded on the side of the valve element (22) by a membrane (29), in which there is provided a through-hole (30), which can be closed and opened by means of a closing element (33, 42), connected to the valve element (22), and is consequently provided with a filling valve (34, 41, 46), by means of which it is possible to compensate for leakage losses in the coupling space (26).

2. Valve according to Claim 1, **characterized in that** the membrane (29) is provided with an annular bead.

3. Valve according to Claim 1 or 2, **characterized in that** the closing element (33, 42) is formed as part of the shank (27, 48) of the valve element (22) and **in that**, to support the membrane (29), an annular disc (31, 45, 47) lying directly on it is provided.

4. Valve according to one of Claims 1 to 3, **characterized in that** an opening stroke of the valve element (22) is limited by an annular body (35) which is shrink-fitted onto the shank of the said element and interacts with a stop shoulder fixed to the housing.

5. Valve according to one of Claims 1 to 4, **characterized in that** the membrane actuator (25) is bounded with respect to the actuator piston (38) of the piezoelectric actuator (24) likewise by a membrane (28).

## Revendications

1. Soupape pour réguler des liquides, avec un organe de soupape (22) qui peut être actionné par un actionneur de membrane (25) et qui est sous l'effet d'un ressort de pression (23) en direction de fermeture sur son siège de soupape (20), l'actionneur de membrane (25) formant une paroi mobile d'un espace de couplage (26) limité sur son autre côté par un piston actionneur (38) d'un piézo-acteur (24), dont le déplacement peut produire une augmentation de pression dans l'espace de couplage (26) grâce à laquelle l'organe de soupape (22) peut être déplacé en direction d'ouverture s'opposant à la force du ressort de pression (23),
**caractérisée en ce que**
sur le côté de l'organe de soupape (22), l'espace de couplage (26) est limité par une membrane (29) dans laquelle est prévu un orifice (30) qu'on peut fermer et ouvrir à l'aide d'un organe de fermeture (33, 42) relié à l'organe de soupape (22) et donc est équipée d'une soupape de remplissage (34, 41, 46) au moyen de laquelle il est possible de compenser les pertes par fuite dans l'espace de couplage (26).

2. Soupape selon la revendication 1,
**caractérisée en ce que**
la membrane (29) est munie d'un collet annulaire.

3. Soupape selon la revendication 1 ou 2,
**caractérisée en ce que**
l'organe de fermeture (33, 42) est formé en tant que partie de la tige (27, 48) de l'organe de soupape (22) et on prévoit pour soutenir la membrane (29) un disque (31, 45, 47) qui s'appuie directement sur elle.

4. Soupape selon l'une des revendications 1 à 3,
**caractérisée en ce qu'**
une course d'ouverture de l'organe de soupape (22) est limitée par un corps annulaire (35) calé à chaud sur sa tige (27, 48) et agissant conjointement avec un épaulement d'arrêt solidaire du boîtier.

5. Soupape selon l'une des revendications 1 à 4,
**caractérisée en ce que**
l'actionneur de membrane (25) est également limité par une membrane (28) par rapport au piston actionneur (38) du piézo-acteur (24).
